(19) Europäisches Patentamt
European Patent Office
Office européen des brevets

(11) Veröffentlichungsnummer: **0 025 530**
**B1**

# (12) EUROPÄISCHE PATENTSCHRIFT

(45) Veröffentlichungstag der Patentschrift: **20.06.84**

(51) Int. Cl.³: **C 08 F 110/10**, C 08 F 2/06, C 08 F 4/14, C 08 F 4/16

(21) Anmeldenummer: **80105115.2**

(22) Anmeldetag: **28.08.80**

(54) **Verfahren zur Herstellung von Polyisobutylenen.**

(30) Priorität: **08.09.79 DE 2936361**

(43) Veröffentlichungstag der Anmeldung: **25.03.81 Patentblatt 81/12**

(45) Bekanntmachung des Hinweises auf die Patenterteilung: **20.06.84 Patentblatt 84/25**

(84) Benannte Vertragsstaaten: **AT BE DE FR GB NL**

(56) Entgegenhaltungen:
**DE - B - 1 071 340**
**DE - B - 1 108 438**
**GB - A - 946 034**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Mohr, Heinrich, Dr., Carostrasse 41, D-6710 Frankenthal (DE)**
Erfinder: **Immel, Wolfgang, Dr., Carl-Bosch-Strasse 78, D-6700 Ludwigshafen (DE)**
Erfinder: **Fauth, Karl-Heinz, Haardtblick 7, D-6719 Wattenheim (DE)**

**EP 0 025 530 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von Polyisobutylen durch Polymerisation von Isobutylen in einer Polymerisationszone, in der eine Temperatur zwischen 0 und −160 °C herrscht, mit einem Friedel-Crafts-Katalysator und – gegebenenfalls – Molekulargewichtsregler in üblichen Mengen in Anwesenheit von 10 bis 5000 Gew.-ppm, bezogen auf das eingesetzte Isobutylen, eines Polymerisationsbeschleunigers und in Gegenwart von 30 bis 90 Gewichtsprozent, bezogen auf das eingesetzte Isobutylen, eines unter Reaktionsbedingungen inerten, niedrigsiedenden Lösungsmittels.

Bei derartigen Polymerisationsverfahren ist es erforderlich, in Gegenwart von Katalysatoren und gegebenenfalls Molekulargewichtsreglern sowie in Gegenwart von Beschleunigern zu arbeiten, wobei letztere ausser einer Erhöhung des Molekulargewichts des entstehenden Polymerisats eine Beschleunigung des Reaktionsablaufs und eine Verringerung der Katalysatormenge bewirken sollen. Es ist ferner von technischem Interesse, die Polymerisation des Isobutylens bei festgelegten niedrigen Temperaturen durchzuführen, wo Vernetzungs- und Nebenreaktionen nicht vorhanden sind, und gleichzeitig die Polymerisationswärme des Isobutylens abzuführen.

Es ist bekannt, zur Erfüllung dieser Erfordernisse die Polymerisation des Isobutylens, die zwischen 0 und −160 °C verläuft, mit Friedel-Crafts-Verbindungen gegebenenfalls in Gegenwart von Molekulargewichtsreglern zu katalysieren und zur Beschleunigung der Reaktion und Erhöhung des Molekulargewichts in Anwesenheit von 10 bis 5000 Gew.-ppm, bezogen auf das Isobutylen, eines Polymerisationsbeschleunigers zu arbeiten und zur Abführung der Reaktionswärme in Gegenwart eines niedrigsiedenden inerten Lösungsmittels, das unter Reaktionsbedingungen verdampft, zu polymerisieren (vgl. DE-AS 1 108 438, DE-PS 1 071 340 und DE-PS 1 099 171). Bei den bekannten Verfahren wird das verdampfte Lösungsmittel in einem Kompressor verdichtet und in den Polymerisationsprozess zurückgeführt.

Es hat sich gezeigt, dass das im Kreis geführte Lösungsmittel nach kurzer Zeit eine so hohe Konzentration an Fremdstoffen, welche die Reglerwirkung stören und eine Erhöhung der Polymerisationszeit und des Katalysatorverbrauchs verursachen können, mit sich führt, dass eine aufarbeitende Reinigung unumgänglich war.

Hierzu kann man das Lösungsmittel waschen (vgl. DE-AS 1 108 438) oder über eine Reinigungsmasse, üblicherweise Tonerdegel, leiten (vgl. DE-PS 1 071 340). Eine aufwendige Destillation bei tiefer Temperatur oder aber unter Druck ist meist ausserdem noch erforderlich (vgl. DE-AS 1 108 438).

Die bekannten wirtschaftlichen Verfahren zur Reinigung des Lösungsmittels haben aber den Nachteil, dass die durch Nebenreaktionen entstandenen sauren Stoffe nicht oder nur im beschränkten Ausmass beseitigt werden. So ist z.B. Tonerdegel in bezug auf saure Stoffe nur beschränkt aufnahmefähig, besonders dann, wenn Spuren von Isobutylen aus der Polymerisationszone in den Kreislauf des verdampfenden Lösungsmittels gelangen und auf dem Tonerdegel unter Bildung von Oligomeren des Isobutylens polymerisieren und dessen Oberfläche bedecken. Hochaktive Tonerdegele zerfallen ausserdem unter gleichzeitiger Wirkung von in Nebenreaktionen entstandenem Wasser oder Butanol, und das entstehende feine Pulver führt zu lästigen Verstopfungen von Armaturen. Als äusserst störend erweist sich Wasser, das beim Tiefkühlen des verdampften Lösungsmittels in mikrokristalliner Form die Filter passiert und sich undefiniert ablagert und gar die Polymerisation des Isobutylens stört.

Der Erfindung liegt die Aufgabe zugrunde, ein Verfahren aufzufinden, bei dem das im Kreis geführte Lösungsmittel durch eine Adsorptionszone von störenden Verunreinigungen befreit wird, ohne dass die obenerwähnten Nachteile auftreten.

Diese Aufgabe wird erfindungsgemäss dadurch gelöst, dass das bei der Polymerisation verdampfte Lösungsmittel kontinuierlich abgezogen, verflüssigt und im flüssigen Zustand durch eine wasserfreie alkalisch eingestellte Adsorptionszone geleitet und erneut der Polymerisationszone zugeführt wird.

Nach bevorzugter Verfahrensweise soll die Adsorptionszone zu 70 bis 95 Gewichtsprozent aus einem bei Temperaturen von 250 bis 550 °C aktivierten Aluminiumoxid und zu 30 bis 5 Gewichtsprozent aus einem Alkali- und/oder Erdalkalhydroxid oder sie soll aus einer hochaktiven Zinkoxidschicht bestehen.

Nach besonders bevorzugter Verfahrensweise soll das Aluminiumoxid durch Erhitzen auf Temperaturen von 300 bis 500 °C aktiviert worden sein.

Verfahren zur Herstellung von Polyisobutylen durch Polymerisation von Isobutylen in einer Polymerisationszone sind seit geraumer Zeit bekannt und werden in der Monographie von H. Güterbock «Chemische Technologie der Kunststoffe in Einzeldarstellungen, Polyisobutylen», 1959, Seiten 77 bis 105, Springer-Verlag, Berlin/Göttingen/Heidelberg ausführlich beschrieben. Die erhaltenen Polyisobutylene sind bei Raumtemperatur, je nach Molekulargewicht, viskos-ölig bis gummielastisch, haben eine Dichte von 0,83 bis 0,93 g/cm³ und weisen die Formel:

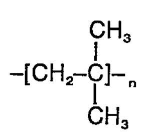

auf, wobei n = 2 bis 80 000.

Die Polymerisation des Isobutylens erfolgt nach bekanntem Verfahren bei Reaktionstemperaturen zwischen 0 und −160 °C, vorzugsweise arbeitet man bei Temperaturen zwischen −50 °C und −110 °C. Das Verfahren arbeitet drucklos.

Für das erfindungsgemässe Verfahren verwendet man in erster Linie Bortrifluorid als Friedel-Crafts-Katalysator in üblichen Mengen von 0,01 bis 1,0 Gewichtsprozent, bezogen auf das eingesetzte Isobutylen. Ausser Bortrifluorid eignen sich die für die Polymerisation von Isobutylen bekannten Friedel-Crafts-Katalysatoren wie $AlCl_3$, $AlBr_3$, $SnCl_4$, $TiCl_4$, $VCl_3$ usw. und Mischungen aus diesen. Um bei einer gegebenen Temperatur das Molekulargewicht des Polyisobutylens gezielt einstellen zu können, bedient man sich gegebenenfalls der sogenannten Molekulargewichtsregler in üblichen Mengen von 1 bis 5000 Gew.-ppm, bezogen auf das eingesetzte Isobutylen. Derartige Molekulargewichtsregler sind beispielsweise die Verbindungen n-Buten, Diisobutylen, Mercaptane, Sulfide oder Polysulfide. Neben einer Erniedrigung des Molekulargewichts der entstehenden Isobutylenpolymerisate bewirken die Molekulargewichtsregler eine beträchtliche Erhöhung der Reaktionszeit und erfordern häufig auch eine Erhöhung des Katalysatorbedarfs.

Die Polymerisation des Isobutylens wird in Gegenwart von 10 bis 5000 Gew.-ppm, bezogen auf das eingesetzte Isobutylen, eines Polymerisationsbeschleunigers durchgeführt. Diese Substanzen bewirken eine Beschleunigung des Reaktionsablaufs und eine Verringerung der erforderlichen Katalysatormenge. Als Folge dieser Zusätze entstehen ausserdem hochmolekulare Polyisobutylene, da kettenabbrechende Einflüsse weniger wirksam werden. Es handelt sich hierbei vorzugsweise um primäre oder sekundäre Alkohole mit 1 bis 10 Kohlenstoffatomen, beispielsweise um Methanol, Äthanol, n-Propanol, iso-Propanol, n-Butanol, iso-Butanol, Amylalkohole, Cyclohexanol und Benzylalkohol. In Betracht kommen ausserdem Phenole, Carbonsäuren oder Mineralsäuren.

Die Polymerisation des Isobutylens wird in Gegenwart von 30 bis 90 Gewichtsprozent, bezogen auf das eingesetzte Isobutylen, eines unter Reaktionsbedingungen inerten, niedrigsiedenden Lösungsmittels vorgenommen. Wegen der günstigen Lage ihrer Siedepunkte geeignete Lösungsmittel sind bevorzugt Methan, Äthan, Propan und besonders Äthylen, da durch Verdampfen derselben unter Reaktionsbedingungen die Polymerisationswärme des Isobutylens auf einfache Weise abgeführt werden kann. Bei Verwendung der obengenannten Lösungsmittel, die gleichzeitig Kühlmittel sind, z.B. beim Einsatz von Äthylen, wird das Isobutylen bei Siedetemperatur des inerten Lösungsmittels polymerisiert. Im Falle des Äthylens beträgt die Polymerisationstemperatur −104 °C.

Nach erfindungsgemässem Verfahren wird das bei der Polymerisation verdampfte Lösungsmittel kontinuierlich abgezogen, verflüssigt und in flüssigem Zustand durch eine wasserfreie, alkalisch eingestellte Adsorptionszone geleitet und erneut der Polymerisationszone zugeführt. Nach bevorzugter Verfahrensweise besteht die Adsorptionszone zu 70 bis 95 Gewichtsprozent aus einem bei Temperaturen von 250 bis 550 °C, bevorzugt von 300 bis 500 °C, aktiviertem Aluminiumoxid und zu 30 bis 5 Gewichtsprozent aus einem Alkali- und/oder Erdalkalihydroxid oder sie besteht aus einer hochaktiven Zinkoxidschicht.

Bei der Durchführung des erfindungsgemässen Verfahrens geht man zweckmässig in der Reihenfolge vor, wie in der Figur schematisch dargestellt ist.

Das monomere Isobutylen 1 wird mit dem flüssigen Lösungsmittel 2 als Strom I über den Kühler 3 in den Polymerisationsreaktor 4 eingebracht und dort mit dem im Strom II gelösten Katalysator 5 vereinigt. Strom II besteht aus einer Lösung des Polymerisationsinitiators 5 (z.B. $BF_3$) und dem Lösungsmittel 2. Strom II wird im Kühler 6 auf Polymerisationstemperatur gebracht. Die Polymerisation wird, um ein hohes Molekulargewicht zu erzielen, vorzugsweise bei einer Temperatur von −90 °C bis −110 °C durchgeführt. Das Produkt wird über eine Schleuse 13 ausgetragen. Das durch die Wärmeabgabe bei der Reaktion verdampfende Lösungsmittel gelangt in den Kreislauf 7 und damit zunächst in die Kolonne 8, in der es z.B. mit Wasser zur Entfernung von Oligomeren und nicht verbrauchtem Initiator gewaschen werden kann. Gegebenenfalls verwendet man für diese Aufgabe Wasserdampf gemäss DE-AS 2 303 744. Im weiteren Durchströmen des Kreislaufs wird das Lösungsmittel in der mit einem Trockenmittel beschickten Kolonne 9 getrocknet, im Kompressor 10 auf 15 bis 25 bar komprimiert, im Kondensator 11 bei einer Temperatur von −25 bis −35 °C verflüssigt und über den mit aktivem $Al_2O_3$ beschickten Turm 12 geleitet, wo es vollständig von der Restfeuchtigkeit und Verunreinigung, wie Resten des Monomeren, des Initiators, Nebenprodukten der Polymerisation sowie gegebenenfalls Spuren des zur Schmierung des Kompressors 10 verwandten Öls befreit wird. Das Lösungsmittel wird im Vorratsgefäss 2 gesammelt. Nach dem Durchlaufen des Turmes 12 wird es auf den Strom I und Strom II für den von neuem einsetzenden Kreislauf verteilt. In Kühler 3 und 6 wird das Lösungsmittel auf die gewünschte Polymerisationstemperatur gebracht. Kernstück der Lösungsmittelreinigung 12 ist die aus dem mit 5 bis 30 Gew.-% Alkali- oder Erdalkalihydroxid imprägnierten Aluminiumoxid bestehende Adsorptionsschicht.

Das aktivierte, imprägnierte Aluminiumoxid wird beispielsweise hergestellt, indem man 70 bis 95 Gewichtsteile $Al_2O_3$ einer Korngrösse von 2 bis 8 mm, vorzugsweise von 3 bis 5 mm, Durchmesser mit 30 bis 5 Teilen eines der in Betracht kommenden Hydroxide, insbesondere NaOH, KOH und $Ca(OH)_2$, vorzugsweise KOH, imprägniert und den so erhaltenen Kontakt bei 250 bis 550 °C, vorzugsweise bei 350 bis 500 °C, in einem Inertgasstrom, z.B. einem Luft- oder Stickstoffstrom, aktiviert. Man kann aber auch das $Al_2O_3$ mit einer Lösung des Hydroxids benetzen und sodann das Lösungsmittel, vorzugsweise Wasser, verdampfen. Erschöpfte Kontaktmassen können durch erneutes Aktivieren in einem Luft- oder Stickstoffstrom regeneriert werden. Sie sind dann wieder voll wirksam.

Die Adsorptionsschicht weist eine Dicke von 0,2 bis 10 cm, vorzugsweise von 2 bis 5 cm, auf. Für die Reinigung empfiehlt sich eine zylinderförmige

Ausgestaltung. Vorzugsweise ist sie als Rieselturm ausgebildet.

Dem Problem anzupassende Adsorptionsprozesse sind zum Beispiel in «Trocknung von Gasen und Flüssigkeiten» von Klaus Sztaticsny Chemie-Technik 5., Jahrgang 1976, Nr. 12 und in «Chemische Verfahrenstechnik» von Kassatkin Band II VEB-Verlag, Leipzig, 1962 auf Seiten 222 und 223 beschrieben.

Das hochaktivierte Zinkoxid, das für das anmeldungsgemässe Verfahren verwendet wird, ist ein im Handel erhältliches Produkt, das nach den in der DE-PS 1 266 549, US-PS 4 128 619 und US-PS 4 071 609 beschriebenen Verfahren hergestellt wird.

Als Polymerisationsreaktor 4 kommen Reaktionsschneckenmaschinen, endlose Bänder, kontinuierlich arbeitende Kneter, Mischer, Extruder und Sprühanlagen in Betracht.

Der Wäscher 8 kann beispielsweise eine Bodenkolonne, eine Füllkörperkolonne oder ein Rieselturm sein.

Der Vortrockner 9 ist ein mit einem Trockenmittel, z.B. Natriumsulfat, Calciumchlorid und insbesondere Kieselgel beschicktes Gefäss mit einer dem Problem angepassten Gestalt. Mit Vorteil wird der Vortrockner 9 als Turm ausgebildet, den das gasförmige Lösungsmittel aufsteigend durchströmt.

Dem Isobutylen können vor oder während der Polymerisation übliche Additive, wie Stabilisatoren, Regler, Farbstoffe und dergleichen, einverleibt werden. Diese können aber auch den Polyisobutylenen nach der Polymerisation zugemischt werden. Die Stabilisatoren werden im allgemeinen in Mengen von 0,01 bis 2,0, vorzugsweise von 0,05 bis 0,25 Gew.-%, bezogen auf das Gewicht des Polyisobutylens, verwendet.

Als Stabilisatoren kommen alle für die Stabilisierung von Polyisobutylen üblichen Verbindungen in Betracht. Geeignet sind beispielsweise phenolische Antioxydantien, wie 2,6-Di-tert.-butyl-p-kresol, Tertiäramylphenolsulfid und Tertiäramylphenoldisulfid. Weiterhin sind Stoffe, die Amin-, Sulfid- oder aromatische Hydroxylgruppen enthalten, z.B. Di-(2-oxy-5-butyl-phenyl)-sulfid oder -disulfid, Phenyl-β-naphthylamin, Polyvinyläthylsulfid oder Polyvinylbutylsulfid geeignet.

Das Verfahren erlaubt es, Polyisobutylen sowohl diskontinuierlich als auch ohne Störungen über lange Zeiträume kontinuierlich herzustellen. Die nach dem erfindungsgemässen Verfahren erhaltenen Polyisobutylene haben eine Grenzviskosität [η] von 0,9 bis 12 dl/g (bestimmt nach ASTM D 1601 und DIN 51562), weisen eine enge Molekulargewichtsverteilung mit geringer Standardabweichung auf und zeichnen sich durch eine minimale Verfärbung aus. Es ist ein Vorteil des erfindungsgemässen Verfahrens, dass Polymerisationsstörungen, wie erhöhte Wasser- und Alkoholbildung durch Nebenreaktionen, Umsetzungen mit gegebenenfalls eingesetzten Trockenmitteln, wie Calciumchlorid unter Freisetzung von Salzsäure, erhöhte Oligomerenbildung, Verstopfungen von Messleitungen durch Katalysatorreste und niedermolekulare Polyisobutylene und Belegungen von Apparaten und Wärmeaustauschern, vermieden werden.

Das neue Verfahren wird in den nachstehenden Beispielen näher erläutert. Dabei bedeuten Teile, soweit nicht anders angegeben, Gewichtsteile. Die Grenzviskosität wird zur Charakterisierung des Molekulargewichts von Polyisobutylen verwandt.

Die Grenzviskosität [η] in dl/g wird aus der Lösungsviskosität einer Polyisobuten-Isooktanlösung bei 20 °C bestimmt. Als Messgerät dient ein Ubbelohde-Viskosimeter, Kapillare Nr. 1. Aufgrund der Schulze-Blaschke-Beziehung kann die Grenzviskosität errechnet werden:

$$[\eta] = \frac{\frac{\eta sp}{c}}{1 + 0{,}31 . \eta_{sp}}$$

Es bedeuten:

$[\eta]$ = Grenzviskosität (intrinsic Viscosity)

$\eta_{sp} = \frac{t}{to} - 1$ = spezifische Viskosität

t = Durchlaufzeit der Lösung korrigiert nach Hagenbach-Couette

to = Durchlaufzeit des Lösungsmittels Isooktan, korrigiert nach Hagenbach-Couette

c = Konzentration der Lösung in g Polyisobutylen/100 ml Lösung.

Zur Charakterisierung des Vergiftungsgrades durch Katalysatorrest im Kreisgas wird die Masszahl «mg NaOH/kg Kreisgas» gewählt. Dabei werden über 500 ml einfach destilliertes Wasser, welches in handelsüblichen Frittenwaschflaschen vorgelegt wird, ca. 1–2 $Nm^3$ Kreisgas geleitet. Ein aliquoter Teil der Waschflüssigkeit wird mit $\frac{1}{10}$ n NaOH gegen Phenolphthalein titriert. Der Verbrauch an $\frac{1}{10}$ n NaOH ist das Mass für den Gehalt an sauren Bestandteilen.

1 ml 0,1 n NaOH = 4 mg NaOH entspricht
1,08 mg Bor
oder 6,781 mg $BF_3$
oder 3,65 mg HCl
oder 4,9 mg $H_2SO_4$

Beispiel 1

Man entnimmt dem Vorratsgefäss 2 über Umgang 14 500 Raumteile pro Stunde Äthylen. Das Äthylen enthält gemäss Probennahme 15 an sauren Bestandteilen den äquivalenten Wert von 2 mg NaOH/kg $C_2H_4$. Diesen Strom teilt man im Verhältnis 1 : 1 in Strom I und Strom II. Strom I mischt man mit 270 Raumteilen/Stunde Isobutylen aus Vorlage 1, das 175 Gew.-ppm Isobutanol, 75 Gew.-ppm Methanol, 1600 Gew.-ppm Diisobutylen enthält, und kühlt im Kühler 3 auf die Polymerisationstemperatur von −104 °C.

Strom II wird im Kühler 6 auf die Polymerisationstemperatur von −104 °C abgekühlt und über die Katalysatordosierstation 5 mit 0,4 Raumteilen/Stunde Bortrifluorid versetzt.

Die Ströme I und II werden in den Polymerisationsreaktor 4 von 5000 Raumteilen Inhalt vereinigt, wobei die Polymerisation des Isobutens als exotherme Reaktion abläuft. Die Temperatur steigt dabei über den Siedepunkt des Äthylens an. Das Polymerisat mit einer Grenzviskosität [η] = 1,26 g/dl wird über 14 ausgetragen, während das verdampfende Äthylen den Reaktor über die Kreislaufleitung 7 verlässt und einer 500 Raumteile fassenden, mit Raschigringen beschickten Füllkörperkolonne 8 zum Waschen mit Wasser zugeleitet wird. Anschliessend wird das Äthylen im Trockenturm 9 (Volumen ca. 500 Raumteile) über gekörntes, walnussgrosses Calciumchlorid getrocknet und im zweistufigen Kompressor 10 auf etwa 19 bar komprimiert. Es wird im Kondensator 11 auf −30 °C abgekühlt und verflüssigt und im Vorratsgefäss 2 gespeichert und wieder auf Strom I und II verteilt. Verluste werden über Frischgasäthylenzugabe 16 ergänzt.

Die Probennahme an Stelle 15 wird alle 12 Stunden durchgeführt.

| Probennahme nach Betriebsstunden | Saure Bestandteile im Kreisgas (mg NaOH/kg $C_2H_4$) |
|---|---|
| 0 | 2 |
| 12 | 25 |
| 24 | 60 Polymerisationsstörungen! |
| 48 | 120 |

Nach 24 Stunden ist das Äthylen von Katalysatorresten leicht gelblich verfärbt, die Messleitungen belegen sich mit Oligomeren und erschweren den Durchfluss. Der Katalysatorverbrauch muss auf 0,6 Raumteile/Stunde erhöht werden. Das Polymerisat hatte anfänglich in der Grenzviskosität eine Standardabweichung S von ± 0,03, nach 24 Stunden vergrössert sich die Standardabweichung auf ± 0,3. Nach ca. 100 Stunden ist das Kreislaufäthylen so verunreinigt, dass eine störungsfreie und typengerechte Polymerisation nicht mehr möglich ist. Der Kreislauf muss ausgedämpft werden.

Beispiel 2

Man verfährt wie in Beispiel 1 beschrieben, jedoch mit dem Unterschied, dass der Äthylenstrom von 500 Raumteilen pro Stunde aus Vorratsgefäss 2 in der als Rieselturm ausgebildeten Kreisgasreinigung 12 (vgl. Figur) über 100 Raumteile Kontaktmasse einer Schichtdicke von 3 cm aus mit 20 Gew.-% KOH imprägnierten $Al_2O_3$ (Körnung etwa 3 mm) gereinigt wird.

Die Kreisgasprobennahme an Stelle 15 wird wie im Beispiel 1 beschrieben durchgeführt.

| Probennahme nach Betriebsstunden | Saure Bestandteile im Kreisgas (mg NaOH/kg $C_2H_4$) |
|---|---|
| 0 | 2 |
| 12 | 2 |
| 24 | 3 |
| 48 | 5 |
| 336 | 25 |

Die Polymerisation läuft auch nach 14 Tagen noch störungsfrei, das Kreisgasäthylen und das erhaltene Polymerisat sind farblos, die Standardabweichung der Grenzviskosität des erzeugten Polyisobutylens beträgt ± 0,03. Der Kontaktverbrauch beträgt unverändert 0,15% $BF_3$, bezogen auf die Menge des in der Zwischenzeit gebildeten Polymerisats.

Beispiel 3

Man verfährt wie in Beispiel 2 beschrieben. Der Unterschied besteht darin, dass der in der Reinigung 12 eingesetzte Kontakt nach ca. 400 Betriebsstunden als Kreisgasreinigungsmittel in einem Luftstrom bei etwa 430 °C regeneriert worden ist.

| Probennahme nach Betriebsstunden | Saure Bestandteile im Kreisgas (mg NaOH/kg $C_2H_4$) |
|---|---|
| 0 | 2 |
| 12 | 4 |
| 24 | 8 |
| 48 | 11 |
| 336 | 37 |

Die Polymerisation läuft störungsfrei, das Kreisgasäthylen bleibt farblos, der Kontaktverbrauch bleibt konstant, die Grenzviskosität des in der Zwischenzeit gebildeten Polymerisates zeigt eine konstant bleibende Standardabweichung von ± 0,03.

Beispiel 4

Man verfährt wie in Beispiel 1 beschrieben, jedoch mit dem Unterschied, dass der Äthylenstrom von 500 Raumteilen pro Stunde aus Vorratsgefäss 2 in der als Rieselturm ausgebildeten Kreisgasreinigung 12 (vgl. Figur) über 100 Raumteile hochaktives Zinkoxid (Körnung etwa 4 mm) einer Schichtdicke von 4 cm gereinigt wird.

Die Kreisgasprobennahme an Stelle 15 wird wie im Beispiel 1 beschrieben durchgeführt.

| Probennahme nach Betriebsstunden | Saure Bestandteile im Kreisgas (mg NaOH/kg $C_2H_4$) |
|---|---|
| 0 | 2 |
| 240 | 3 |
| 360 | 4 |
| 480 | 6 |

Die Polymerisation läuft auch nach 20 Tagen noch störungsfrei, das Kreisgasäthylen und das erhaltene Polymerisat sind farblos, der Kontaktverbrauch bleibt konstant und die Grenzviskosität des in der Zwischenzeit gebildeten Polymerisates zeigt eine konstant bleibende Standardabweichung von $\pm$ 0,03.

**Patentansprüche**

1. Verfahren zur Herstellung von Polyisobutylen durch Polymerisation von Isobutylen in einer Polymerisationszone, in der eine Temperatur zwischen 0 und $-160\,°C$ herrscht, mit einem Friedel-Crafts-Katalysator und – gegebenenfalls – Molekulargewichtsregler in üblichen Mengen in Anwesenheit von 10 bis 5000 Gew.-ppm, bezogen auf das eingesetzte Isobutylen, eines Polymerisationsbeschleunigers und in Gegenwart von 30 bis 90 Gewichtsprozent, bezogen auf das eingesetzte Isobutylen, eines unter Reaktionsbedingungen inerten, niedrigsiedenden Lösungsmittels, dadurch gekennzeichnet, dass das bei der Polymerisation verdampfte Lösungsmittel kontinuierlich abgezogen, verflüssigt und im flüssigen Zustand durch eine wasserfreie alkalisch eingestellte Adsorptionszone geleitet und erneut der Polymerisationszone zugeführt wird.

2. Verfahren nach Anspruch 1, dadurch gekennzeichnet, dass die Adsorptionszone zu 70 bis 95 Gewichtsprozent aus einem bei Temperaturen von 250 bis 550 °C aktiviertem Aluminiumoxid und zu 30 bis 5 Gewichtsprozent aus einem Alkali- und/oder Erdalkalihydroxid besteht.

3. Verfahren nach Anspruch 1, dadurch gekennzeichnet, dass die Adsorptionszone aus einer hochaktiven Zinkoxidschicht besteht.

4. Verfahren nach Anspruch 2, dadurch gekennzeichnet, dass das Aluminiumoxid durch Erhitzen auf Temperaturen von 300 bis 500 °C aktiviert worden ist.

**Claims**

1. A process for the production of polyisobutylene by polymerizing isobutylene in a polymerization zone where a temperature of from 0 to $-160\,°C$ prevails, using a Friedel-Crafts catalyst, with or without a molecular-weight regulator in a conventional amount, in the presence of from 10 to 5000 wt.ppm, based on the isobutylene used, of a polymerization accelerator and in the presence of from 30 to 90% by weight, based on the isobutylene used, of a low-boiling solvent which is inert under the reaction conditions, wherein the solvent vaporized in the polymerization is continuously removed, liquefied and passed in the liquid state through an anhydrous, alkaline adsorption zone and resupplied to the polymerization zone.

2. A process as claimed in claim 1, wherein the adsorption zone contains from 70 to 95% by weight of an aluminium oxide activated at from 250 to 550 °C, and from 30 to 5% by weight of an alkali metal hydroxide and/or alkaline earth metal hydroxide.

3. A process as claimed in claim 1, wherein the adsorption zone consists of a highly active zinc oxide layer.

4. A process as claimed in claim 2, wherein the aluminium oxide has been activated by heating at from 300 to 500 °C.

**Revendications**

1. Procédé de préparation de polyisobutènes par polymérisation de l'isobutène dans une zone de polymérisation maintenue à une température entre 0 et $-160\,°C$, en présence d'un catalyseur de Friedel-Crafts et éventuellement de régulateurs du poids moléculaire en des proportions usuelles, ainsi que de 10 à 5000 ppm en poids par rapport à l'isobutène mis en œuvre d'un accélérateur de la polymérisation et de 30 à 90% en poids par rapport à l'isobutène mis en œuvre d'un solvant à bas point d'ébullition, inerte dans les conditions opératoires, caractérisé en ce que le solvant vaporisé durant la polymérisation est soutiré en continu, liquéfié et recyclé dans la zone de polymérisation après passage, à l'état liquide, à travers une zone d'adsorption basique anhydre.

2. Procédé suivant la revendication 1, caractérisé en ce que la zone d'adsorption est constituée à raison de 70 à 95% en poids d'un oxyde d'aluminium activé à des températures de 250 à 550 °C et à raison de 30 à 5% en poids d'un hydroxide de métal alcalin et(ou) alcalino-terreux.

3. Procédé suivant la revendication 1, caractérisé en ce que la zone d'adsorption est constituée d'une couche d'un oxyde de zinc hautement actif.

4. Procédé suivant la revendication 2, caractérisé en ce que l'oxyde d'aluminium a été activé par un chauffage entre 300 et 500 °C.

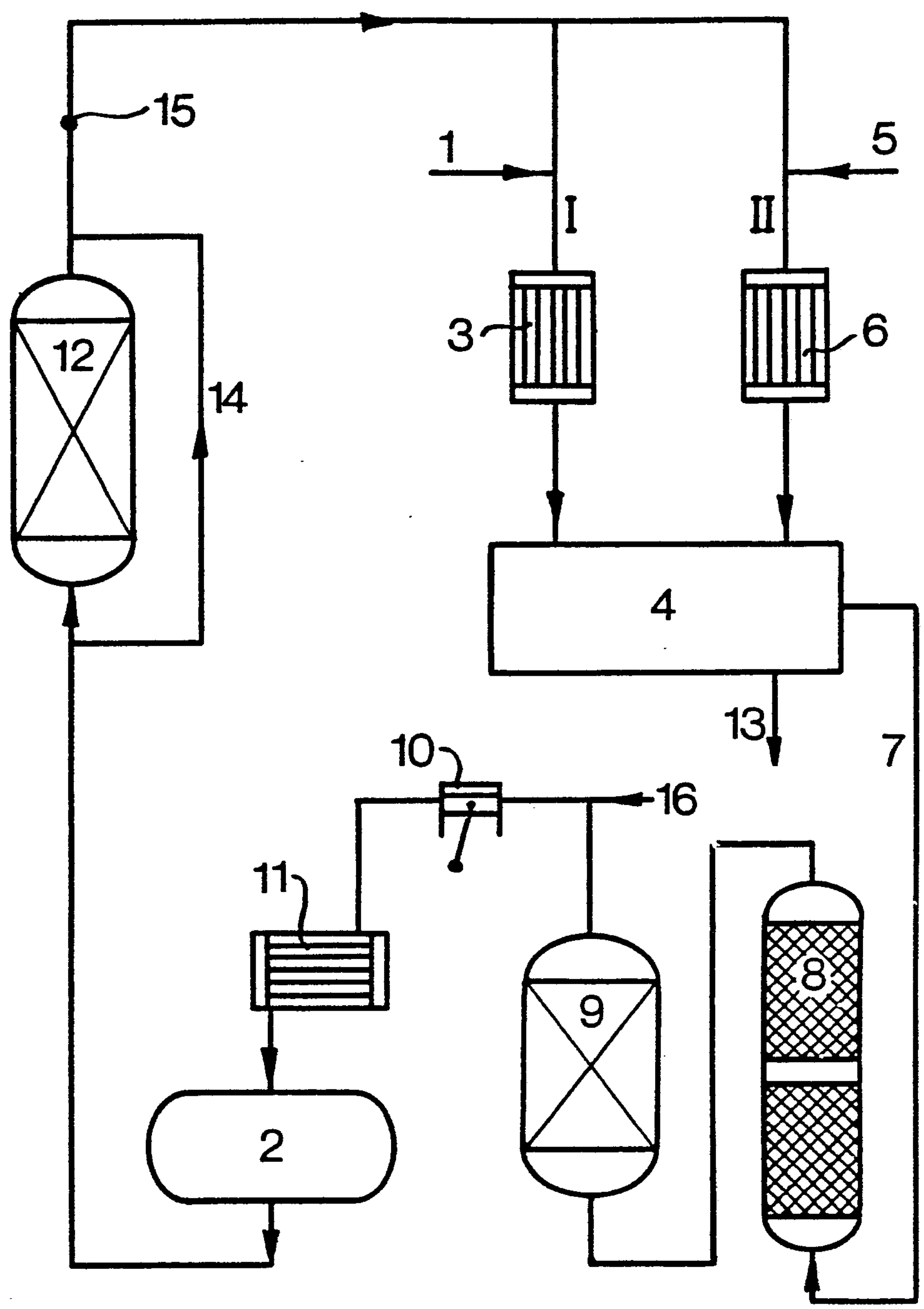
15
1
5
I
II
3
6
12
14
4
13
7
10
16
11
8
9
2